Europäisches Patentamt

European Patent Office

Office européen des brevets

(11) Publication number : **0 439 218 A2**

# (12) EUROPEAN PATENT APPLICATION

(21) Application number : **91200059.3**

(22) Date of filing : **14.01.91**

(51) Int. Cl.⁵ : **C08F 283/10,** C08L 63/02,
C08L 25/12

(30) Priority : **15.01.90 GB 9000845**

(43) Date of publication of application :
**31.07.91 Bulletin 91/31**

(84) Designated Contracting States :
**BE DE ES FR GB IT NL SE**

(71) Applicant : **SHELL INTERNATIONALE
RESEARCH MAATSCHAPPIJ B.V.
Carel van Bylandtlaan 30
NL-2596 HR Den Haag (NL)**

(72) Inventor : **Eleveld, Michiel Barend
Badhuisweg 3
NL-1031 CM Amsterdam (NL)**
Inventor : **Van Veelen, Arie
Badhuisweg 3
NL-1031 CM Amsterdam (NL)**

(54) **Impact modified thermosets.**

(57)     A cured thermosetting resin composition having a $T_g$ of at least 135 °C and an impact Strength of at least 70 kJ.m⁻² and being obtainable by the curing of a polyglycidylether of a polyhydric phenol with an epoxy group content of from 2 to 8 mol.kg⁻¹, in the presence of styrene monomer and a carboxylated acrylonitrile/diene copolymer, the latter being employed in an amount of from 5 to 30 phr, the styrene monomer being employed in an amount of from 10 to 35 phr, provided the total amount of styrene monomer and said copolymer in the formulation does not exceed 40 phr, each phr standing for parts by weight per 100 parts by weight of polyglycidylether.

EP 0 439 218 A2

# IMPACT MODIFIED THERMOSETS

This invention concerns thermosetting resin compositions having improved impact strength, which may i.a. be employed as a matrix in composite materials.

Japanese Patent Application 78/139,213 relates to compositions comprising reaction products of a urethane modified epoxy resin and an acrylonitrile/butadiene copolymer having carboxyl groups at the end of the molecules. In order to improve the adhesive strength and viscosity these known compositions may be modified by the addition of reactive monomers, e.g. hydroxy acrylates or styrene. This patent reference does not teach the provision of compositions having a superior balance of high $T_g$, and high impact strength, and which do not show phase separation during gelling, such compositions being an object of the present invention. Another technical advantage the compositions of this invention have their low viscosity. It is surprising that these benefits can be obtained with impact modifying carboxyl functionalized acrylonitrile/diene copolymers and not with the closely related vinyl or amine modified acrylonitrile/diene copolymers, as is shown by the comparative experimental data included herein.

The compositions of this invention are characterized by having a $T_g$ of at least 135 °C and an impact strength of at least 70 kJ.$m^{-2}$ and by being obtainable by the curing of a polyglycidyl ether of a polyhydric phenol with an epoxy group content (EGC) of from 2000 to 8000 mmol.$kg^{-1}$, in the presence of styrene monomer and a carboxylated acrylonitrile/diene copolymer, the latter being employed in an amount of from 5 to 30 phr and the styrene monomer being employed in an amount of from 10 to 35 phr, provided the total amount of styrene monomer and of said copolymer in the formulation does not exceed 40 phr, the expression "phr" standing for parts by weight per 100 parts by weight of diglycidyl ether. the $T_g$ referred to herein is determined by differential scanning calorimetry (DSC).

In the compositions of this invention it is not critical whether the carboxyl groups in the functionalized copolymer are at the ends of the macromolecular polymer chains or evenly distributed over the whole lengths of the chains. The preferred diene moiety in the copolymer is butadiene, however isoprene may be employed as well. Eligible copolymers are those known in the market. Good examples are the commercial grades Hycar (registered trade mark) CTBN and Hycar CTBNX. Preferred amounts of elastomer constituent in the compositions of this invention are from 10 to 25 phr. Preferred amounts of styrene monomer are from 15 to 30 phr.

In order to ensure the polymerization of the styrene monomer the compositions of this invention will normally comprise a chemical compound or mixture of compounds initiating radical polymerization, preferably based on an organic peroxide. A wide choice of useful initiator systems is known from the prior art.

Likewise a wide choice of epoxy resins meeting the EGC limits set by this invention is known in the market. Preferred resins are diglycidyl ethers of dihydric phenols, in particular 4,4-dihydroxyphenyl propane, of which good examples are the commercial grades Epikote (registered trade mark) 828 and Epikote 1001. Most preferred are those diglycidyl ethers which are liquid at ambient temperature. Di- or polyglycidyl ether resins made by fusing or advancing high EGC resins with di- or polyhydric phenols can be employed as well.

Curing agents for the epoxy resins may be selected from those known in the art. Preferred are diamine-type agents such as isophoronediamine or diaminodiphenyl methane.

Whilst it is in principle possible to prepare the compositions of this invention by combining the various constituents in any order, it is nevertheless preferred to first prereact the epoxy resin with the carboxylated copolymer and then add styrene monomer, initiator, curing agent and optionally polymerization as curing accelerator.

Useful applications for the present novel thermosetting resin compositions are primarily in the field of composite materials, e.g. in sheet moulding or in civil engineering applications.

## EXAMPLES

Epoxy resin, carboxylated acrylonitrile/butadiene copolymer and tetrabutylammonium iodide catalyst were mixed at room temperature and heated at 150 °C during 1.5 hours.

Then, the prereacted product was cooled to room temperature and styrene monomer and Luperox 101 initiator and copper acetylacetonate accelerator and isophoronediamine (IPD) curing agent catalyst were added. The resulting mix was gelled at a temperature of 80 to 100 °C for 1 hour, whereafter the gelled product was cured for a period of 4 hours at temperatures of from 50 to 100 °C.

The table shows the evaluation results of various formulations.

Note : The specimen dimensions in the Charpy impact test were 50 x 6.25 x 12.5 mm (length x width x thickness). The span was 40 mm. The impact was applied to the width side of the specimens.

## TABLE

| Composition phr | Viscosity Pa.s (23 °C) | $T_g$, °C | Charpy Impact Strength kJ.m$^{-2}$ |
|---|---|---|---|
| Examples: | | | |
| E828/CTBN/IPD/styrene | 0.5 | 139 | 79 |
| 100 / 15 /24 / 25 | | | |
| E828/CTBNX/IPD/styrene | 0.52 | 138 | 84 |
| 100 / 15 /24 / 25 | | | |
| Comparative Examples: | | | |
| E828/ATBN/IPD/styrene | 0.66 | 138 | 69 |
| 100 / 15 /24 / 25 | | | |
| E828/VTBNX/IPD/styrene | 0.56 | 138 | 64 |
| 100 / 15 /24 / 25 | | | |
| E828/CTBN/IPD | 6.3 | 114 | (*) |
| 100 / 15 /24 | | | |
| E828/CTBNX/IPD | 6.7 | 114 | (*) |
| 100 / 15 /24 | | | |
| E828/VTBNX/IPD | 4.5 | 128 | 61 |
| 100 / 15 /24 | | | |
| E828/IPD | 1.7 | 148 | 65 |
| 100 /24 | | | |

E828 = Epikote 828 (EGC 5300 mmol.kg$^{-1}$)

CTBN = carboxylated acrylonitrile/butadiene copolymer, Hycar 1300X8

CTBNX= carboxylated acrylonitrile/butadiene copolymer, Hycar 1300X9

VTBNX= vinyl terminated acrylonitrile/butadiene copolymer, Hycar 1300X23

ATBN = amine terminated acrylonitrile/butadiene copolymer, Hycar 1300X16

(*) not determined as suitable samples could not be prepared (viscosity too high).

## Claims

1. A cured thermosetting resin composition having a $T_g$ of at least 135 °C and an Impact Strength of at least

70 kJ.m$^{-2}$ and being obtainable by the curing of a polyglycidylether of a polyhydric phenol with an epoxy group content of from 2 to 8 mol.kg$^{-1}$, in the presence of styrene monomer and a carboxylated acrylonitrile/diene copolymer, the latter being employed in an amount of from 5 to 30 phr, the styrene monomer being employed in an amount of from 10 to 35 phr, provided the total amount of styrene monomer and said copolymer in the formulation does not exceed 40 phr, each phr standing for parts by weight per 100 parts by weight of polyglycidylether.

2. A curable thermosetting resin composition comprising a curing agent and the constituents as claimed in claim 1 and in the relative amounts as claimed in claim 1.

3. A composition as claimed in claim 1 or 2 wherein the styrene monomer is present in an amount of from 15 to 30 phr.

4. A composition as claimed in claim 1 or 2 in which the copolymer is present in an amount of from 10 to 25 phr.

5. A composition as claimed in claim 1 wherein the polyglycidylether resin is prereacted with the carboxylated copolymer.

6. A composition as claimed in any one of claims 1 to 5 in which the acrylonitrile content in the copolymer is from 15 to 30 %wt.